# EUROPÄISCHE PATENTSCHRIFT

(11) **EP 2 538 371 B1**
(45) Veröffentlichungstag und Bekanntmachung des Hinweises auf die Patenterteilung: **27.11.2019**
(21) Anmeldenummer: 11171030.7
(22) Anmeldetag: 22.06.2011
(51) Int. Cl.: G06K 9/00, H04N 1/00, H04N 1/32

(54) **Verfahren zum Scannen von Dokumenten und automatischen Steuern der Weiterverarbeitung der Dokumente**
Method for scanning documents and automatic management of the processing of documents
Procédé de balayage de documents et de commande automatique du traitement des documents

(43) Veröffentlichungstag der Anmeldung: 26.12.2012
(73) Patentinhaber: Meschede, Thomas, 70372 Stuttgart (DE)
(72) Erfinder: Meschede, Thomas, 70372 Stuttgart (DE)
(74) Vertreter: dompatent von Kreisler Selting Werner - Partnerschaft von Patent- und Rechtsanwälten mbB

(56) Entgegenhaltungen:
- DE-A1- 3 233 318
- JP-A- 2005 234 708
- US-A- 3 804 005
- US-A- 5 640 647
- US-A- 5 644 408
- US-A1- 2008 050 019
- US-A1- 2009 284 806
- US-A1- 2011 090 534

## Beschreibung

Die Erfindung betrifft ein Verfahren zum Scannen von Dokumenten, insbesondere bedruckten Papierblättern, und automatischen Steuern der Weiterverarbeitung der Dokumente nach Anspruch 1, sowie ein Dokument nach dem Oberbegriff des Anspruchs 13, das einscannbar und mechanisch und/oder digital weiterverarbeitbar ist.

Bisher ist bekannt, Dokumente während des Scanvorgangs zu trennen. Dafür wird häufig ein leeres Blatt zwischen den Dokumenten eingelegt. Die Dateigröße einer eingescannten leeren Seite ist geringer als die Dateigröße einer bedruckten und eingescannten Seite. Die Dateigrößen werden verglichen und dadurch wird erkannt, dass eine leere Seite zwischen den Dokumenten angeordnet ist. Diese eingescannten Dokumente werden voneinander getrennt abgespeichert.

Dies hat jedoch den Nachteil, dass häufig die eingestellte Auflösung des Scanners nicht berücksichtigt wird. Zudem wird auch die zunehmende Verschmutzung des Scanners nicht berücksichtigt. Dadurch kann es zu Fehlern kommen. Ferner funktioniert dieses Verfahren nicht richtig, wenn das Dokument im Stapel schief eingezogen wurde oder nach dem automatischen Geraderichten eines Dokumentes schwarze Schatten an den Rädern entstehen. Auch wird beim doppelseitigen Scanvorgang nicht berücksichtigt, dass Dokumente nicht immer doppelseitig beschrieben sind. Dies hat den Nachteil, dass eigentlich zusammengehörige Dokumente getrennt werden.

Bei einem anderen Verfahren wird ein Barcode verwendet. Mit Hilfe dieses Barcodes können die Dokumente nicht nur getrennt werden, sondern es können auch das Dokument betreffende Informationen in den Barcode eingebracht sein, die zur Weiterverarbeitung benötigt werden.

Der Barcode wird meist in Form eines Barcodeaufklebers aufgeklebt. Dies hat den Nachteil, dass die Papierstärke verändert wird. Dies führt dazu, dass z.B. die Doppeleinzugskontrolle der Scanner nicht richtig funktioniert. Ferner wird ein zusätzlicher Barcodeprinter und weitere Mechanik benötigt, um den Barcode auf den Dokumenten anzubringen. Zudem werden bei Unternehmen häufig mehrere Barcodes auf einem Dokument angebracht. Dies hat den Nachteil, dass beim Einscannen der falsche Barcode eingelesen wird und das Dokument nicht derart weiterverarbeitet wird, wie es eigentlich vorgesehen ist.

Die US 3804005 offenbart einen automatisch betriebenen Drucker, bei dem bestimmte zu verarbeitende Dokumente, sogenannte "masters" vorgesehen sind, die aus speziell vorbereiteten Blättern bestehen. Diese "masters" haben in dem Seitenbereich mindestens eine Spalte und eine Reihe mit Kästchen aufgedruckt. Dadurch, dass bestimmte Kästchen markiert sind, können Informationen an den Drucker gegeben werden. Es ist jedoch nicht vorgesehen, dass diese Markierungen manuell aufgebracht werden. Die Markierungen müssen als Binärcode eingegeben werden, was offensichtlich praktisch nicht manuell vorgenommen werden kann, sondern nur in einem programmierbaren Druckvorgang erfolgen kann.

Der Erfindung liegt daher die Aufgabe zugrunde, ein einfaches und kostengünstiges Verfahren zum Einscannen von Dokumenten und automatischen Weiterverarbeiten der Dokumente sowie ein Dokument zu schaffen, das einfach und kostengünstig eingescannt und weiterverarbeitet werden kann.

Zur Lösung dieser Aufgabe dienen die Merkmale der Ansprüche 1 und 7.

Dies hat den Vorteil, dass die Markierungen manuell aufgebracht werden können. Somit können die Markierungen einfach und kostengünstig auf den zu scannenden Dokumenten angebracht werden. Abhängig von diesen in dem Randbereich aufgebrachten Markierungen wird das Dokument weiterverarbeitet. Somit ist nicht nur eine einfache Dokumententrennung möglich, sondern auch die Steuerung der Weiterverarbeitung.

Die zumindest eine Markierung kann vorzugsweise mit Hilfe eines Stiftes aufgebracht werden. Dadurch, dass die Markierung mit Hilfe eines normalen Stiftes aufgebracht werden kann, können die einzuscannenden Dokumente schnell zum Einscannen vorbereitet werden. Im Gegensatz zu Barcode-Druckern oder Barcode-Aufklebern ist somit eine erhebliche Zeiteinsparung möglich.

Die Weiterverarbeitung der Dokumente kann eine digitale und/oder mechanische Weiterverarbeitung sein. So können z.B. die eingescannten Dokumente digital z.B. auf einem Computer oder Server weiterverarbeitet werden. Auch ist es möglich die eingescannten Dokumente nach dem Einscannen mit Hilfe einer Vorrichtung, die mit dem Scanner verbunden ist, mechanisch weiterzuverarbeiten. Eine solche mechanische Weiterverarbeitung kann z.B. Lochen des Dokumentes und/oder Tackern des Dokumentes sein.

Es können mehrere Markierungen im nicht bedruckten Randbereich aufgebracht werden.

Beim automatischen Erfassen der zumindest einen, auf den Randbereich des Dokuments aufgebrachten Markierung, kann die Form der Markierung ermittelt werden.

Abhängig von der Form der Markierung kann ein Befehl zum automatischen Steuern der Weiterverarbeitung des Dokumentes ausgegeben werden.

Wenn mehrere Markierungen mit unterschiedlichen Farben im Randbereich aufgebracht sind, kann beim Erfassen der Markierungen überprüft werden, welche Farben die Markierungen aufweisen. Abhängig davon, welche Farben die Markierungen aufweisen, kann ein oder können mehrere Befehle zum automatischen Steuern der Weiterverarbeitung des Dokumentes ausgegeben werden.

Der Randbereich kann in drei bis fünfzehn, vorzugsweise in zehn Bereiche aufgeteilt werden.

Wenn mehrere Markierungen im Randbereich aufgebracht sind, kann beim Erfassen der Markierungen überprüft werden, in welchen Bereichen die Markierungen aufgebracht sind. Abhängig davon, in welchen Bereichen die Markierungen angeordnet sind, kann ein oder können mehrere Befehle zum Steuern der Weiterverarbeitung des Dokumentes ausgeben werden.

Die Weiterverarbeitung, insbesondere die digitale Weiterverarbeitung, kann eine Speicherung und/oder Sortierung und/oder Zuordnung und/oder Passwortverschlüsselung und/oder Komprimierung und/oder Kategorisierung und/oder automatische Texterkennung und/oder Dokumententrennung sein.

Die mechanische Weiterverarbeitung kann beispielsweise Lochen der Dokumente und/oder Heften bzw. Tackern der Dokumente sein.

Bei einer digitalen Weiterverarbeitung wird das eingescannte Dokument vorzugsweise ohne Markierung weiterverarbeitet. Dies bedeutet, dass das Dokument zum Beispiel ohne Markierung abgespeichert wird. Dies hat den Vorteil, dass wenn das eingescannte Dokument z. B. ausgedruckt wird, die Markierungen nicht mehr auf dem Dokument vorhanden sind. Diese Dokumente können dann erneut von einer anderen Abteilung markiert werden.

Auch kann vorsehen sein, dass das Dokument gespeichert und passwortverschlüsselt wird. Das heißt, dass das Dokument nur nach Eingabe eines Passworts lesbar angezeigt werden kann.

Ferner sieht die Erfindung in vorteilhafterweise vor, dass bei einem einscanbaren und mechanisch und/oder digital weiterverarbeitbaren Dokument ein nicht bedruckter Randbereich in Bereiche eingeteilt ist und dass zumindest in einem dieser Bereiche des nicht bedruckten Randbereichs zumindest eine manuell aufgebrachte Markierung angeordnet ist.

Die Markierung kann mit Hilfe eines Stiftes aufbringbar sein. Das Dokument kann ein Blatt Papier sein.

Es können mehrere manuell aufgebrachte Markierungen in dem Randbereich angeordnet sein.

Der Scanner kann beim Scannen des Dokumentes eine digitale Datei erstellen, die an die Datenverarbeitungseinrichtung gesendet wird. Diese digitale Datei ist vorzugsweise eine Bilddatei. Diese Bilddatei kann beispielsweise eine jpg- oder pdf-Datei sein. Auf der Datenverarbeitungseinrichtung kann ein Programm angeordnet sein, das die digitale Datei, die vom Scanner an die Datenverarbeitungseinrichtung übermittelt worden ist, analysieren kann. Mit Hilfe dieses Programms wird ermittelt, ob das eingescannte Dokument, das eine Bilddatei sein kann, im Randbereich Markierungen aufweist. Da das eingescannte Dokument (z.B. die digitale Bilddatei) ein digitales Abbild des originalen Dokumentes ist, wird somit auch ermittelt, ob das originale Dokument im Randbereich Markierungen aufweist.

In Abhängigkeit davon, ob Markierungen im Randbereich angeordnet sind, wird die digitale Weiterverarbeitung des eingescannten Dokumentes (z.B. die digitale Bilddatei) und/oder die mechanische Weiterverarbeitung des originalen Dokumentes gesteuert.

Ein Scanner kann ein handelsüblicher Scanner sein. Es versteht sich jedoch, dass auch jegliche andere Vorrichtung, wie z.B. Fotoapparat oder Kamera, verwendet werden kann, mit der man ein digitales Abbild (z.B. ein Foto) eines Dokumentes machen kann.

Im Folgenden werden unter Bezugnahme auf die Zeichnungen Ausführungsbeispiele der Erfindung näher erläutert.

Es zeigen schematisch:
- Fig. 1: ein Dokument mit nichtbedruckten Randbereich,
- Fig. 2: ein Dokument mit einer im Randbereich aufgebrachten Markierung,
- Fig. 3: ein Dokument mit mehreren im Randbereich aufgebrachten Markierungen,
- Fig. 4: ein Dokument mit Markierungen unterschiedlicher Form,
- Fig. 5: ein Scanner mit einzuscannendem Dokument,
- Fig. 6: ein Bildschirm auf dem mehrere eingescannte digitale Dokumente zu sehen sind,

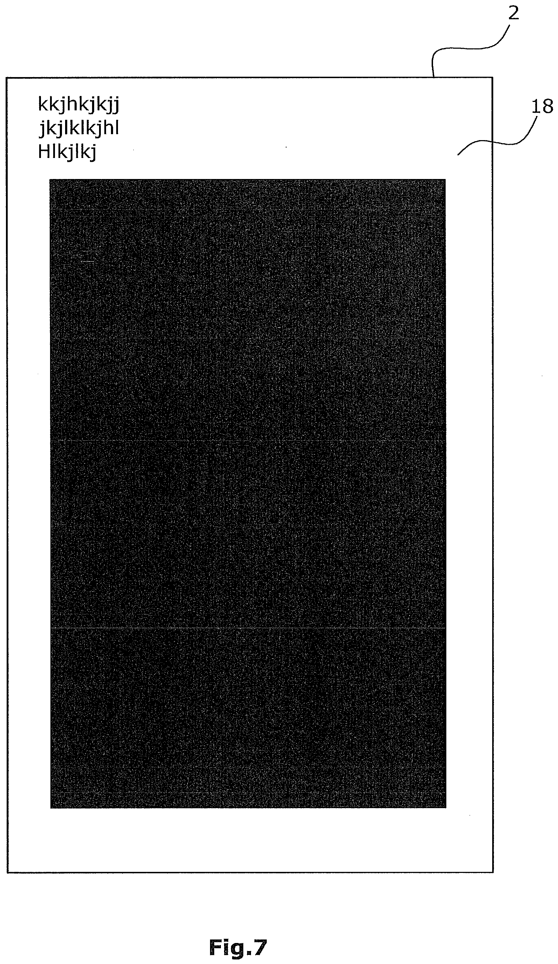

- Fig. 7: ein digitales eingescanntes Dokument mit Passwortverschlüsselung,
- Fig. 8: ein Scanner mit angeschlossener Einrichtung zur mechanischen Weiterverarbeitung.

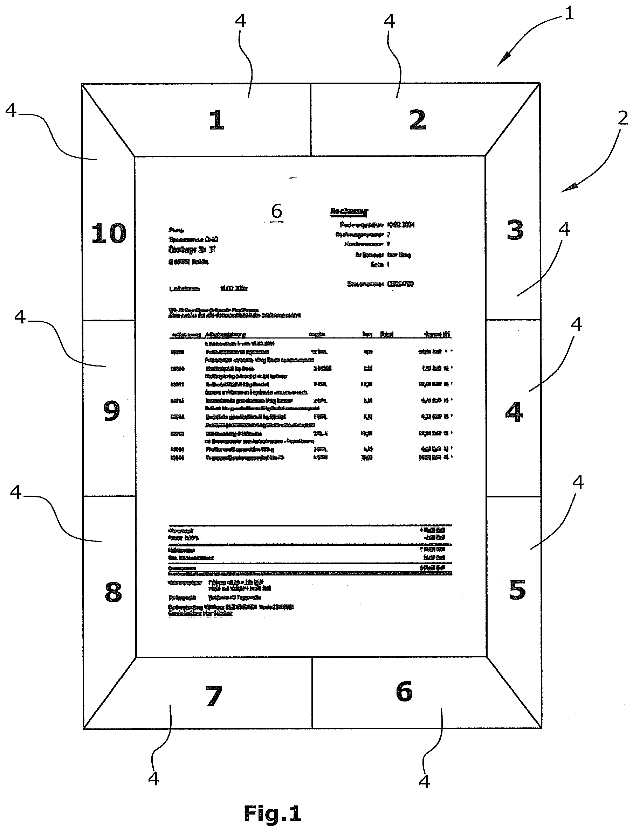

Figur 1 zeigt ein Dokument 1. Dieses Dokument 1 weist einen bedruckten Bereich 6 und einen nicht bedruckten Randbereich 2 auf.

Der Randbereich ist eine Fläche bzw. ein Feld am Rand bzw. an der Seite des Dokumentes. Der Randbereich kann z.B. eine Breite von 2 cm vom Rand aufweist. In der Figur 1 ist der nicht bedruckte Randbereich 2 an allen vier Seiten bzw. Rändern des Dokumentes 1 angeordnet. Der nicht bedruckte Randbereich 2 kann jedoch auch nur an einer, zwei oder drei Seiten bzw. Rändern des Dokumentes 1 angeordnet sein.

Der nicht bedruckte Randbereich 2 ist in mehrere Bereiche 4 eingeteilt. In der Figur 1 ist der Randbereich 2 in zehn Bereiche 4 eingeteilt. Die Bereiche 4 sind Felder, die in dem Randbereich 2 angeordnet sind. Diese Felder sind genauso breit wie der Randbereich, z.B. 2 cm und sie können z.B. eine Länge von 8 cm bis 10 cm aufweisen.

Diese Einteilung in die Bereiche 4 ist vorzugsweise eine nicht sichtbare Einteilung. Dies bedeutet, dass das Dokument 1 vorzugsweise keine zur Begrenzung der Bereiche 4 vorgesehenen gedruckten Linien aufweist. Es wird lediglich festgelegt, dass ein solches Dokument beispielsweise zehn Bereiche 4 innerhalb des nicht bedruckten Randbereiches 2 aufweist. Ferner ist festgelegt, dass der Randbereich 2 eine bestimmte Breite aufweist und die Bereiche 4 des Randbereiches 2 eine bestimmte Größe aufweisen. Die manuell aufzubringenden Markierungen können dann innerhalb der Bereiche 4, die geometrisch genau festgelegt sind, angeordnet werden.

In dem nicht bedruckten Randbereich 2 kann zumindest eine Markierung 8 aufgebracht werden. Diese zumindest eine Markierung 8 kann zum Beispiel mit Hilfe eines Stiftes 9 aufgebracht werden.

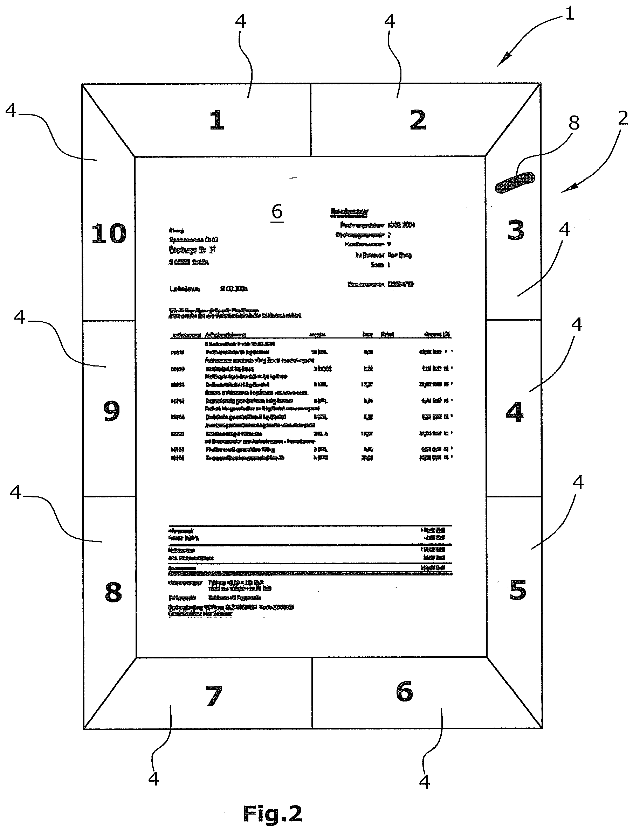

In Figur 2 ist eine Markierung 8 in einem der Bereiche 4 des Randbereiches 2 angeordnet. Diese Markierung kann eine Farbe, z. B. Rot aufweisen.

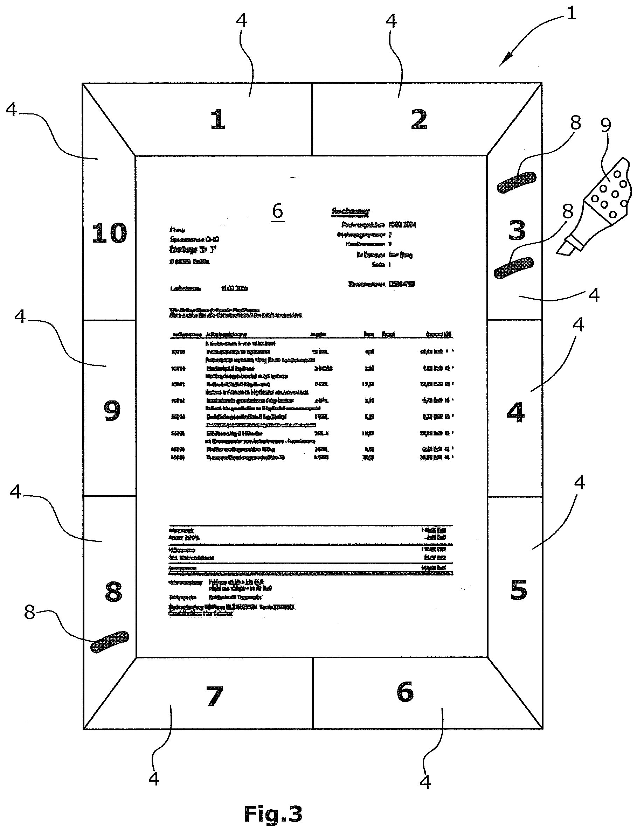

In Figur 3 sind mehrere Markierungen in verschiedenen Bereichen 4 mit Hilfe eines Stiftes 9 aufgebracht. Zwei der Markierungen sind in demselben Bereich 4 angeordnet. Die dritte Markierung ist in einem anderen Bereich 4 angeordnet. Auch diese Markierungen können unterschiedliche Farben oder dieselben Farben aufweisen.

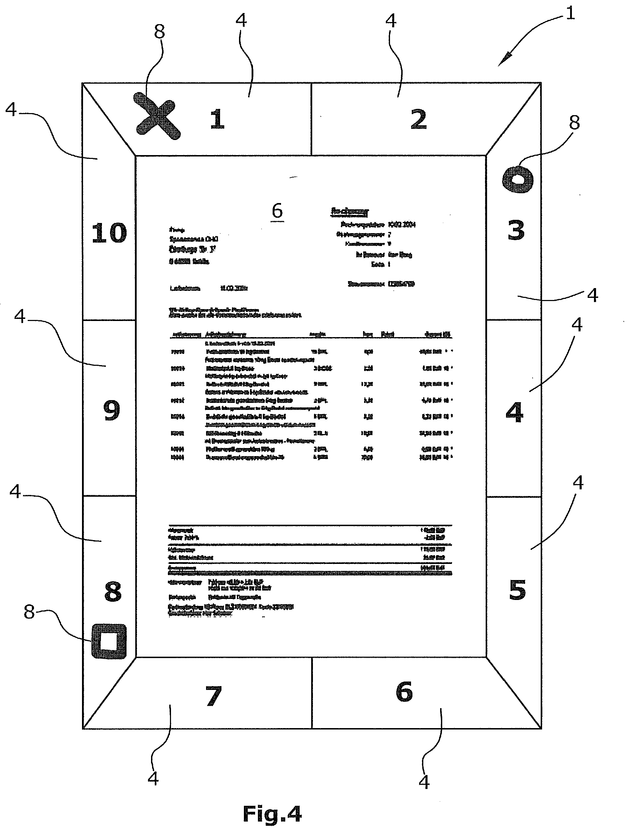

In Figur 4 sind Markierungen, die unterschiedliche Formen aufweisen, in verschiedenen Bereichen 4 des nicht bedruckten Randbereiches 2 angeordnet. Diese Markierungen unterschiedlicher Form können zusätzlich auch unterschiedliche Farben aufweisen.

Um die Einteilung des Randbereichs 2 im Bereich zu erleichtern kann eine Schablone verwendet werden, die an die Größe des Dokumentes 1 angepasst ist und auf das Dokument 1 auflegbar ist. Die in den Figuren nicht dargestellte Schablone kann Ausstanzungen aufweisen, die der Größe der Bereiche 4 entsprechen. Eine solche Schablone kann auf das Dokument 1 aufleget werden, so dass die Ausstanzungen genau an den Stellen der Bereiche 4 angeordnet sind. Die Anordnung der Bereiche 4 kann somit mit Hilfe der Ausstanzungen der Schablone dargestellt werden. Die manuellen Markierungen können durch die Ausstanzungen hindurch auf die Bereiche 4 des Randbereiches aufgebracht werden. Auf einer solchen Schablone können neben den Ausstanzungen Anmerkungen vorgesehen sein, die angeben, welche Steuerungsbefehle bestimmte Markierungen bzw. Markierungskombinationen zur Folge haben.

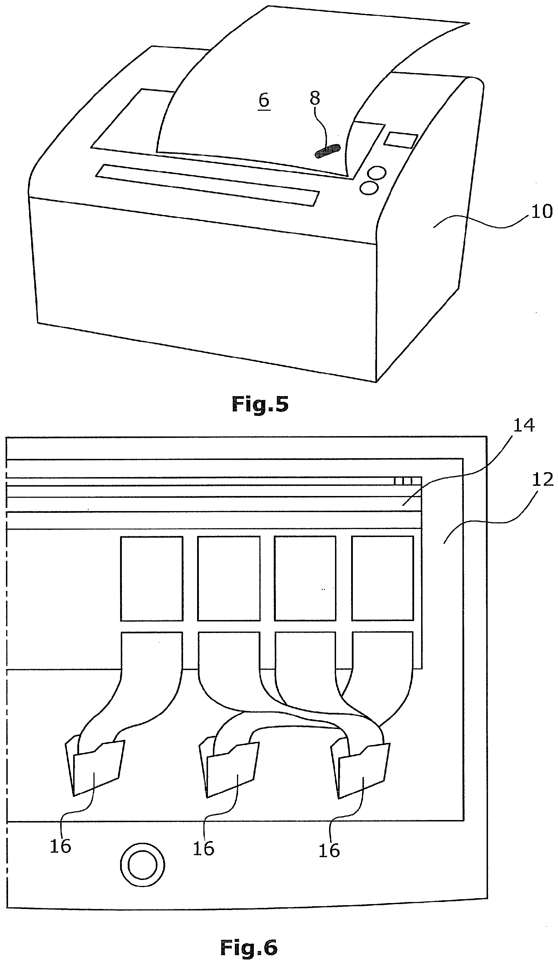

In Figur 5 ist dargestellt, wie ein Dokument 1, das mit einer Markierung 8 versehen ist, von dem Scanner 10 eingescannt wird. Aus Figur 5 ist zu entnehmen, dass die der Randbereich 2 und die Bereiche 4 des Randbereiches 2 lediglich nicht sichtbare Bereiche sind, d. h. diese sind nicht mit sichtbaren Linien auf dem Dokument 1 abgegrenzt.

Die Dokumente 1 können insbesondere bedruckte Papierblätter sein. Ein Dokumente 1 kann aus einem oder mehreren Papierblättern bestehen. So kann das Dokument 1 zum Beispiel aus einem mehrseitigen Brief bestehen. Die zumindest eine Markierung wird vorzugsweise nur auf dem ersten Blatt des Dokumentes 1 angebracht. Alternativ kann auf jedem Blatt des Dokumentes 1 zumindest eine Markierung 8 vorgesehen sein.

Nach dem manuellen Aufbringen der zumindest einen Markierung auf den nicht bedruckten Randbereiche 2 des Dokumentes 1, kann das Dokument 1 mit Hilfe des Scanners 10 eingescannt werden. Nach dem Einscannen des Dokumentes 1 werden die auf dem Randbereich 2 des Dokumentes 1 aufgebrachten Markierungen 8 automatisch erfasst. Dies kann beispielsweise mit Hilfe eines speziellen Programms auf einem Server oder auf einem Computer geschehen.

In Abhängigkeit von der zumindest einen in dem Randbereich 2 aufgebrachten Markierung 8 wird die Weiterverarbeitung des Dokumentes 1 automatisch gesteuert.

Die eingescannten Dokumente 1 können beispielsweise unterschiedlichen Ordnern 16 zugeordnet werden und dort abgespeichert werden. Dies ist in Figur 6 dargestellt. In Figur 6 ist ein Bildschirm 12 dargestellt, auf dem ein digitales Fenster 14 zu sehen ist. Dort sind die eingescannten Dokumente 1 zu sehen. Diese eingescannten Dokumente 1 werden dann abhängig von den auf dem Randbereich 2 aufgebrachten Markierungen 8 unterschiedlich weiterverarbeitet. Die eingescannten Dokumente 1 können z.B. in unterschiedlichen Ordnern abgespeichert werden oder mit unterschiedlichen Beschriftungen abgespeichert werden. Die digitale Weiterverarbeitung kann auch eine Sortierung und/oder Zuordnung und/oder Passwortverschlüsselung und/oder Komprimierung und/oder Kategorisierung und/oder automatische Texterkennung und/oder Dokumententrennung beinhalten. Es versteht sich, dass die digitale Weiterverarbeitung jegliche mögliche digitale Weiterverarbeitung sein kann, die aufgrund eines oder mehrerer Befehle z.B. auf einem Computer ausführbar ist.

So kann beispielsweise bei einer Markierung 8, wie sie in Figur 2 dargestellt ist, ein Steuerungsbefehl ausgegeben werden, das eingescannte Dokument 1 dem Ordner "Rechnungen" einer bestimmten Firma zuzuordnen.

Beim automatischen Erfassen der zumindest einen Markierung können die Farbe und die Anordnung der Markierung, oder die Farbe, Form und die Anordnung der Markierung in einem bestimmten Bereich 4 des Randbereichs 4 erfasst werden. Abhängig von der Farbe und Anordnung, oder abhängig von der Farbe, Form und Anordnung in einem bestimmten Bereich 4 kann ein oder können mehrere Befehle zum automatischen Steuern der Weiterverarbeitung ausgegeben werden. Es wird vorher festgelegt, bei welcher Farbe und Anordnung in einem bestimmten Bereich 4 des Randbereichs 2, oder bei welcher Farbe, Form und Anordnung in einem bestimmten Bereich 4 des Randbereichs 2 welcher Befehl folgt.

In Figur 3 sind mehrere Markierungen 8 im Randbereich 2 angeordnet. Diese Markierung 8 können unterschiedliche Farben aufweisen. Wenn ein Dokument, das mit solchen Markierungen 8 versehen ist, eingescannt wird, können beispielsweise die Befehle gegeben werden, die Rechnung in einem bestimmten Rechnungsordner abzuspeichern und gleichzeitig eine Kopie an die Rechnungsabteilung per E-Mail zu versenden.

Mehrere Markierungen im Randbereich 2 können einen Befehl oder mehrere Befehle zur Folge haben. Auch können mehrere Markierungen 8 z.B. Schwarz sein. Dann wird ein anderer Befehl ausgegeben werden als bei roten Markierungen 8, selbst wenn die Markierungen 8 ebenfalls in demselben Bereich 4 angeordnet sind.

Auch können die unterschiedlichen Formen der Markierungen 8 erfasst werden und abhängig von der Form bzw. den Formen der Markierungen ein- bzw. mehrere Befehle ausgegeben werden. Unterschiedliche Formen können zum Beispiel wie in Figur 5 dargestellt Kreuze, Kreise oder Rechtecke sein. Diese unterschiedlichen Formen können beispielsweise nicht nur mit einem Stift aufgebracht werden, sondern auch mit einem Stempel.

Auch eine bestimmte Kombination von Form, Farbe und Anordnung in einem bestimmten Bereich des Randbereichs 2 kann ein bzw. können mehrere vorher festgelegte Befehle zur Folge haben.

Das eingescannte Dokument 1 ist ein digitales Abbild des einzuscannenden Dokumentes 1, auf dem die Markierungen 8 aufgebracht werden. Das eingescannte Dokument 1 weist die Markierungen 8, die auf dem einzuscannenden, ursprünglichen Dokument 1 aufgebracht sind vorzugsweise nicht auf. Dies bedeutet, dass zwar die gesamten Dokumente 1 eingescannt werden, allerdings wird nur der bedruckte Bereich 6 als eingescanntes Dokument 1 weiterverarbeitet. Die Markierungen 8 in dem Randbereich 2 werden lediglich eingescannt und es wird ein Befehl für die Weiterverarbeitung des eingescannten Dokumentes 1 ausgegeben und dieses eingescannte Dokumente 1 wird dementsprechend weiterverarbeitet. Alternativ kann das eingescannte Dokumente 1 auch mit den eingescannten Markierungen 8 weiterverarbeitet werden.

Sofern dass die eingescannten Dokumente 1 ohne Markierungen weiterverarbeitet werden, hat dies den Vorteil, dass die eingescannten Dokumente 1 ohne Markierungen z. B. wieder ausgedruckt werden können und wieder neu mit Markierungen versehen werden können und wieder in einer anderen Abteilung weiterverarbeiten werden können.

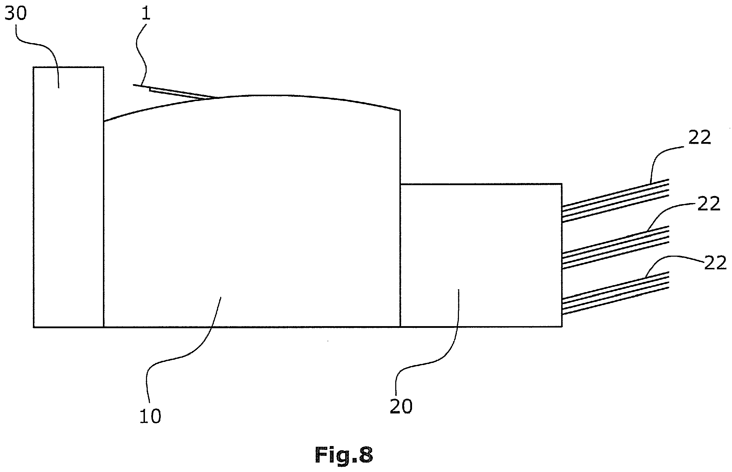

Als digitale Weiterverarbeitung ist auch eine Passwortverschlüsselung des eingescannten Dokumentes 1 möglich. Dies bedeutet, dass der bedruckbare Bereich 6 des Dokumentes 1 nur sichtbar ist, wenn das richtige Passwort eingegeben worden ist. So kann beispielsweise das Briefgeheimnis gewahrt werden. Lediglich die Person, die das Dokument zum Einscannen vorbereitet und mit einer oder mehrerer Markierungen 8 versieht, weiß, was sich auf dem bedruckten Bereich 6 befindet. Bei der digitalen Weiterverarbeitung wird das eingescannte Dokument 1 lediglich verschlüsselt weiterverarbeitet. Der bedruckte Bereich 6 des eingescannten Dokumentes 1 könnte beispielsweise geschwärzt werden, wie in Figur 8 dargestellt. Nur die Person, die das Passwort kennt, kann den bedruckten Bereich lesbar darstellen lassen.

Zusätzlich oder alternativ zu der digitalen Weiterverarbeitung ist auch eine mechanische Weiterverarbeitung möglich. Für eine solche Weiterverarbeitung kann beispielsweise eine Einrichtung 12 zur mechanischen Weiterverarbeitung an den Scanner 10 angeschlossen werden. Eine solche Einrichtung 12 zur mechanischen Weiterverarbeitung kann die eingescannten Dokumente 1 zum Beispiel lochen und/oder heften. Diese mechanische Weiterverarbeitung wird ebenfalls abhängig von den im Randbereich aufgebrachten Markierungen 8 automatisch gesteuert. So können bestimmte Dokumente 1 mit bestimmten Markierungen 8 z.B. nur gelocht und andere nur geheftet werden. Wieder andere Dokumente 1 können beispielsweise gelocht und geheftet werden.

## Patentansprüche

1. Verfahren zum Scannen von Dokumenten (1), insbesondere bedruckten Papierblättern, und automatischen Steuern der Weiterverarbeitung der eingescannten Dokumente (1), durch
- Aufbringen zumindest einer Markierung (8) auf einen Randbereich des Dokumentes (1),
- Einscannen des Dokumentes (1),
- automatisches Erfassen der zumindest einen, auf dem Randbereich des Dokumentes (1) aufgebrachten Markierung (8), und
- automatisches Steuern der Weiterverarbeitung des Dokumentes (1) in Abhängigkeit von der in dem Randbereich (2) aufgebrachten Markierung (8),
**gekennzeichnet durch**
das manuelle Aufbringen der Markierung (8) auf einen nicht bedruckten Randbereich des Dokumentes (1),
wobei der nicht bedruckte Randbereich des Dokumentes (1) in mehrere Bereiche (4) eingeteilt ist, wobei eine Schablone vorgesehen ist, die an die Größe des Dokumentes (1) angepasst ist und auf das Dokument (1) aufgelegt wird, wobei die Schablone Ausstanzungen aufweist, die der Größe der Bereiche (4) entsprechen, wobei die Schablone derart auf das Dokument (1) aufgelegt wird, dass die Ausstanzungen genau an der Stelle der Bereiche (4) angeordnet sind, so dass die Anordnung der Bereiche (4) mit Hilfe der Ausstanzungen der Schablone dargestellt werden, wobei die manuellen Markierungen durch die Ausstanzungen hindurch auf die Bereiche (4) des Randbereiches aufgebracht werden, wobei beim automatischen Erfassen der zumindest einen Markierung (8) die Farbe der Markierung (8) und die Anordnung in einem bestimmten Bereich (4) des Randbereiches ermittelt werden und dass abhängig von der Farbe der Markierung (8) und der Anordnung in einem bestimmten Bereich (4) des Randbereiches ein oder mehrere Befehle zum automatischen Steuern der Weiterverarbeitung des Dokumentes (1) ausgegeben werden.

2. Verfahren nach Anspruch 1, **dadurch gekennzeichnet, dass** die Markierung (8) mit Hilfe eines Stiftes (9) aufgebracht wird.

3. Verfahren nach Anspruch 1 oder 2, **dadurch gekennzeichnet, dass** die Weiterverarbeitung eine digitale und/oder mechanische Weiterverarbeitung ist.

4. Verfahren nach einem der Ansprüche 1 bis 3, **dadurch gekennzeichnet, dass** mehrere Markierungen (8) im nicht bedruckten Randbereich (2) aufgebracht werden.

5. Verfahren nach einem der Ansprüche 1 bis 4, **dadurch gekennzeichnet, dass** die Weiterverarbeitung des Dokumentes (1) eine Speicherung und/oder Sortierung und/oder Zuordnung und/oder Passwortverschlüsselung und/oder Komprimierung und/oder Kategorisierung und/oder automatische Texterkennung und/oder Dokumententrennung ist.

6. Verfahren nach Anspruch 5, **dadurch gekennzeichnet, dass** ein mit Markierungen (8) eigescanntes Dokument (1) ohne Markierungen (8) digital weiterverarbeitet, insbesondere gespeichert wird.

7. System zum Scannen von Dokumenten (1), insbesondere bedruckten Papierblättern, und automatischen Steuern der Weiterverarbeitung der eingescannten Dokumente (1), mit
- einer Datenverarbeitungseinrichtung (30), insbesondere einem Computer,
- einem Scanner (10), und
- zumindest einem von dem Scanner (10) einscannbaren Dokument (1),
- wobei das einscannbare Dokument (1) einen Randbereich (2) aufweist und dieser Randbereich (2) in Bereiche (4) eingeteilt ist,
- wobei die Datenverarbeitungseinrichtung (30) die in dem Randbereich (2) aufgebrachten Markierungen (8) des von dem Scanner (10) eingescannten Dokumentes (1) erfasst, und
- wobei die Datenverarbeitungseinrichtung die Weiterverarbeitung des Dokumentes (1) in Abhängigkeit der in dem Randbereich (2) aufgebrachten Markierungen (8) steuert,
**dadurch gekennzeichnet,**
- **dass** zumindest in einem Bereich (4) eines nicht bedruckten Randbereichs (2) zumindest eine manuell aufgebrachte Markierung (8) angeordnet ist,
- wobei der nicht bedruckte Randbereich des Dokumentes (1) in mehrere Bereiche (4) eingeteilt ist, wobei eine Schablone vorgesehen ist, die an die Größe des Dokumentes (1) angepasst ist und auf das Dokument (1) auflegbar ist, wobei die Schablone Ausstanzungen aufweist, die der Größe der Bereiche (4) entsprechen, wobei die Schablone derart auf das Dokument (1) auflegbar ist, dass die Ausstanzungen genau an der Stelle der Bereiche (4) angeordnet sind, so dass die Anordnung der Bereiche (4) mit Hilfe der Ausstanzungen der Schablone dargestellt werden, wobei die manuellen Markierungen durch die Ausstanzungen hindurch auf die Bereiche (4) des Randbereiches aufbringbar sind,
- wobei beim automatischen Erfassen der zumindest einen auf den Randbereich des Dokumentes aufgebrachte Markierung die Farbe der Markierung und die Anordnung in einem bestimmten Bereich (4) des Randbereiches ermittelbar sind und abhängig von der Farbe der Markierung und der Anordnung in einem bestimmten Bereich (4) ein Befehl oder mehrere Befehle zum automatischen Steuern der Weiterverarbeitung des Dokumentes ausgebbar sind.

## Claims

1. A method for scanning documents (1), in particular printed sheets of paper, and automatically controlling the further processing of the scanned documents (1), by
- applying at least one marking (8) to a margin area of the document (1),
- scanning the document (1),
- automatically detecting the at least one marking (8) applied to the margin area of the document (1), and
- automatically controlling the further processing of the document (1) according to the marking (8) applied in the margin area (2),
**characterized by**
manually applying the marking (8) to a margin area of the document (1) that is not printed on,
wherein the non-printed margin area of the document (1) is divided into a plurality of areas (4), wherein a template is provided that is adapted to the size of document (1) and is laid onto the document (1), wherein the template comprises cut-out regions corresponding to the size of the areas (4), wherein the template is laid onto the document (1) in such a way that the cut-out regions are arranged precisely at the location of the areas (4) such that the arrangement of the areas (4) are represented with the aid of the cut-out regions, wherein the manual markings are applied to the areas (4) of the margin area through the cut-out regions,
wherein in the automatic detection of the at least one marking (8), there is detected the color of the marking (8) and the arrangement in a specific area (4) of the margin area and, according to the color of the marking (8) and the arrangement in a specific area (4) of the margin area, one or a plurality of commands are output for automatic control of the further processing of the document (1).

2. The method according to claim 1, **characterized in that** the marking (8) is applied with the aid of a pen (9).

3. The method according to claim 1 or 2, **characterized in that** said further processing is of a digital and/or mechanical type.

4. The method according to any one of claims 1 to 3, **characterized in that** a plurality of markings (8) are applied to said non-printed margin area (2).

5. The method according to any one of claims 1 to 4, **characterized in that** the further processing of the document (1) is a storing and/or sorting and/or assigning and/or password encryption and/or compressing and/or categorization and/or automatic text recognition and/or document separation process.

6. The method according to claim 5, **characterized in that** a scanned document (1) comprising markings (8) is digitally further processed, particularly stored, without any markings (8).

7. A system for scanning documents (1), in particular printed sheets of paper, and automatically controlling the further processing of the scanned documents (1), comprising
- a data processing device (30), particularly a computer,
- a scanner (10), and
- at least one document (1) adapted to be scanned by the scanner (10),
- wherein the document (1) adapted to be scanned comprises a margin area (2) and said margin area (2) is divided into areas (4),
- wherein the data processing device (30) detects the markings (8), applied in the margin area (2), of the document (1) scanned by the scanner (10), and
- wherein the data processing device controls the further processing of the document (1) according to the markings (8) applied in the margin area (2),
**characterized in**
- **that** at least one of said areas (4) of a non-printed margin area (2) has arranged in it at least one manually applied marking (8),
- wherein the non-printed margin area of the document (1) is divided into a plurality of areas (4), wherein a template is provided that is adapted to the size of document (1) and is adapted to be laid onto the document (1), wherein the template comprises cut-out regions corresponding to the size of the areas (4), wherein the template is adapted to be laid onto the document (1) in such a way that the cut-out regions are arranged precisely at the location of the areas (4) such that the arrangement of the areas (4) are represented with the aid of the cut-out regions of the template, wherein the manual markings are adapted to be applied to the areas (4) of the margin area through the cut-out regions,
- wherein in the automatic detection of the at least one marking applied to the margin area of the document, the color of the marking and the arrangement in a specific area (4) of the margin area are adapted to be detected and, according to the color of the marking and the arrangement in a specific area (4) of the margin area, one command or a plurality of commands are adapted to be output for automatic control of the further processing of the document.

## Revendications

1. Procédé de numérisation de documents (1), en particulier de feuilles de papier imprimées, et de commande automatique du traitement ultérieur des documents numérisés (1), par
- apposition d'au moins un marquage (8) sur une zone de bordure du document (1),
- numérisation du document (1),
- saisie automatique de l'au moins un marquage (8) apposé sur la zone de bordure du document (1), et
- commande automatique du traitement ultérieur du document (1) en fonction du marquage (8) apposé sur la zone de bordure (2),
**caractérisé par** l'apposition manuelle du marquage (8) sur une zone de bordure non-imprimée du document (1), dans lequel la zone de bordure non-imprimée du document (1) est divisée en plusieurs zones (4), dans lequel un gabarit est prévu pour être adapté à la taille du document (1) et est disposé sur le document (1), dans lequel le gabarit comporte des découpes correspondant à la taille des zones (4), dans lequel le gabarit est disposé sur le document (1) de telle façon que les découpes sont agencées exactement aux emplacement des zones (4), de sorte que l'agencement des zones (4) peut être représenté à l'aide des découpes du gabarit, dans lequel les marquages manuels sont apposés sur les zones (4) de la zone de bordure au travers des découpes,
dans lequel lors de la saisie automatique de l'au moins un marquage (8), la couleur du marquage (8) et l'agencement dans une zone (4) définie de la zone de bordure sont déterminés et un ou plusieurs ordres sont émis pour la commande automatique du traitement ultérieur du document (1) en fonction de la couleur du marquage (8) et de l'agencement dans une zone (4) définie de la zone de bordure.

2. Procédé selon la revendication 1, **caractérisé en ce que** le marquage (8) est apposé à l'aide d'un crayon (9).

3. Procédé selon la revendication 1 ou 2, **caractérisé en ce que** le traitement ultérieur est un traitement ultérieur numérique et/ou mécanique.

4. Procédé selon l'une des revendications 1 à 3, **caractérisé en ce que** plusieurs marquages (8) sont apposés dans la zone de bordure non-imprimée (2).

5. Procédé selon l'une des revendications 1 à 4, **caractérisé en ce que** le traitement ultérieur du document (1) est un enregistrement et/ou un classement et/ou une attribution et/ou un chiffrage par mot de passe et/ou une compression et/ou une catégorisation et/ou une reconnaissance automatique de texte et/ou une séparation de document.

6. Procédé selon la revendication 5, **caractérisé en ce qu'**un document (1) numérisé avec des marquages (8) est traité ultérieurement de manière numérique sans marquages (8), en particulier enregistré.

7. Système de numérisation de documents (1), en particulier de feuilles de papier imprimées, et de commande automatique du traitement ultérieur des documents numérisés (1), comprenant
- un dispositif de traitement des données (30), en particulier un ordinateur,
- un scanner (10), et
- au moins un document (1) pouvant être numérisé par le scanner (10),
- dans lequel le document numérisable (1) comporte une zone de bordure (2) et cette zone de bordure (2) est divisée en zones (4),
- dans lequel le dispositif de traitement des données (30) saisit les marquages (8) apposés dans la zone de bordure (2) du document (1) numérisé par le scanner (10), et
- dans lequel le dispositif de traitement des données commande le traitement ultérieur du document (1) en fonction des marquages (8) apposés sur la zone de bordure (2),
**caractérisé**
- **en ce qu'**au moins un marquage (8) apposé manuellement est agencé au moins dans une zone (4) d'une zone de bordure non-imprimée (2),
- dans lequel la zone de bordure non-imprimée du document (1) est divisée en plusieurs zones (4), dans lequel un gabarit est prévu pour être adapté à la taille du document (1) et peut être disposé sur le document (1), dans lequel le gabarit comporte des découpes correspondant à la taille des zones (4), dans lequel le gabarit peut être disposé sur le document (1) de telle façon que les découpes sont agencées exactement aux emplacements des zones (4), de sorte que l'agencement des zones (4) peut être représenté à l'aide des découpes du gabarit, dans lequel les marquages manuels peuvent être apposés sur les zones (4) de la zone de bordure au travers des découpes,
- dans lequel lors de la saisie automatique de l'au moins un marquage apposé dans la zone de bordure du document, la couleur du marquage et l'agencement dans une zone (4) définie de la zone de bordure peuvent être déterminés et un ordre ou plusieurs ordres peuvent être émis pour la commande automatique du traitement ultérieur du document en fonction de la couleur du marquage et de l'agencement dans une zone (4) définie.
